# FASCICULE DE BREVET EUROPEEN

(11) **EP 3 383 513 B1**
(45) Date de publication et mention de la délivrance du brevet: **01.01.2020**
(21) Numéro de dépôt: 16805075.5
(22) Date de dépôt: 30.11.2016
(51) Int. Cl.: A63C 17/26, B60Q 1/44, B60Q 1/52, B62J 6/04

(54) **DISPOSITIF DE SIGNALISATION PERFECTIONNE**
ERWEITERTE SIGNALISIERUNGSVORRICHTUNG
ENHANCED SIGNALIZING DEVICE

(30) Priorité: 30.11.2015 FR 1561620
(43) Date de publication de la demande: 10.10.2018
(73) Titulaire: Cosmo-Connected, 75116 Paris (FR)
(72) Inventeur: PINGREE, Charles, 75116 Paris (FR)
(74) Mandataire: Hirsch & Associés
(86) Numéro de dépôt international: PCT/EP2016/079239
(87) Numéro de publication internationale: WO 2017/093293

(56) Documents cités:
- DE-A1- 3 906 726
- FR-A1- 2 925 874
- US-A1- 2004 008 106
- US-A1- 2005 134 439
- US-A1- 2007 063 831
- US-A1- 2014 098 524

## Description

### DOMAINE TECHNIQUE

Le domaine technique de la présente invention est celui des dispositifs de signalisation. La présente invention trouve notamment une application aux dispositifs de signalisation routière destinés à être porté par un conducteur de véhicule terrestre, de préférence un véhicule à deux roues. Plus généralement, l'invention concerne tout domaine d'activité d'un utilisateur dans lequel cet utilisateur est en mouvement, comme c'est le cas par exemple pour la pratique du vélo, du ski, mais également lors d'une activité sur un chantier de contruction, en particulier lorsque cet utilisateur porte un casque de protection

### ÉTAT DE LA TECHNIQUE

Dans l'état de la technique, dans le cas particulier des dispositifs de signalisation routière, on connaît des dispositifs de signalisation lumineuse fonction du freinage d'un véhicule.

Ces dispositifs permettent à des feux stop de s'éclairer de façon variable en fonction du niveau de freinage constaté par un accéléromètre se trouvant dans la source de lumière.

Mais, pour limiter le nombre et la gravité de leurs accidents, il conviendrait de rendre notamment les conducteurs de véhicules à deux roues plus visibles, en disposant une source de lumière à une hauteur du sol plus élevée que celle des feux desdits véhicules, comme cela est le cas pour le troisième feu stop disposé sur le pare-brise arrière des véhicules à trois ou quatre roues.

Ainsi, d'une part les conducteurs de véhicules à deux roues seraient visibles à travers une automobile intercalée entre un observateur et le feu stop dont il serait équipé et, d'autre part, la distance séparant ledit observateur dudit conducteur serait mieux appréciée par ledit observateur. En effet, il a été prouvé que l'œil humain évalue mieux la distance le séparant d'un objet comportant plusieurs lumières que celle le séparant d'un objet n'en comportant qu'une seule.

En outre, ces dispositifs ne sont pas adaptés à émettre, en cas d'accident, un signal distinct de celui émis pour le freinage, ce qui peut être préjudiciable pour l'intégrité physique du conducteur muni dudit dispositif.

De l'art antérieur le document FR 2 925 874 A1 peut être cité, divulguant un dispositif de signalisation destiné à être porté par un conducteur de véhicule terrestre.

D'une façon générale, dans tout domaine d'activité dans lequel un utilisateur est en mouvement, en particulier lorsque cet utilisateur porte un casque de protection, il existe un réel besoin de réaliser un dispositif de signalisation perfectionné résolvant notamment les problèmes techniques susmentionnés.

### RÉSUMÉ DE L'INVENTION

A cette fin, la présente invention propose un dispositif de signalisation destiné à être porté par un utilisateur en mouvement, notamment un conducteur de véhicule terrestre, ledit dispositif comportant un accéléromètre électronique qui réalise ses mesures selon trois axes orthogonaux, une batterie d'accumulateurs électrochimiques, une première source de lumière, un moyen de communication sans fil destiné à émettre un signal d'alerte, et une unité de contrôle destinée à activer
- ladite source de lumière lorsque ledit accéléromètre mesure une décélération supérieure ou égale à un premier seuil prédéfini de décélération, appelé seuil de freinage, et
- ledit moyen de communication lorsque l'accéléromètre mesure une décélération supérieure ou égale à un deuxième seuil prédéfini de décélération, appelé seuil d'accident,
- ledit moyen de communication lorsque ledit accéléromètre mesure un nombre de basculements entre accélération et décélération supérieur ou égal à un troisième seuil de nombre de basculements prédéfini, dans un laps de temps prédéfini.

Grâce à ces dispositions, d'une part, un conducteur équipé du dispositif selon l'invention est plus visible lors de freinages et, d'autre part, les autres conducteurs, les secours et, optionnellement, les proches dudit conducteur sont avertis instantannément en cas d'accident.

En outre, l'activation du moyen de communication dépend d'un paramètre supplémentaire (nombre de basculement entre accélération et décelération dans un laps de temps prédéfini), ce qui améliore l'efficacité du dispositif selon l'invention

Selon des caractéristiques particulières, ce dispositif comporte en outre un système de géolocalisation destiné à mesurer les coordonnées géographiques dudit dispositif, le signal d'alerte émis par le moyen de communication sans fil contenant lesdites coordonnées géographiques.

Grâce à ces dispositions, le conducteur victime d'un accident est localisé précisément et peut ainsi être secouru plus rapidement.

Selon d'autres caractéristiques particulières, ce dispositif comporte en outre une deuxième source de lumière, l'unité de contrôle étant en outre destinée à activer ladite deuxième source de lumière lorsque ledit accéléromètre mesure une décélération supérieure ou égale au deuxième seuil prédéfini de décélération.

Grâce à ces dispositions, cette deuxième source de lumière, par exemple de couleur orange, peut clignoter de manière à remplir une fonction de feu de détresse.

Selon encore d'autres caractéristiques particulières de ce dispositif, l'unité de contrôle est en outre destinée à activer la deuxième source de lumière lorsque l'accéléromètre mesure un nombre basculements entre accélération et décélération supérieur ou égal au troisième seuil de nombre de basculements prédéfini, dans le laps de temps prédéfini.

Grâce à ces dispositions, l'activation de la deuxième source de lumière dépend également d'un paramètre supplémentaire mentionné plus haut, ce qui améliore encore l'efficacité du dispositif selon l'invention.

Selon encore d'autres caractéristiques particulières, ce dispositif comporte en outre une photodiode et une troisième source de lumière, l'unité de contrôle étant en outre destinée à activer ladite troisième source de lumière lorsque ladite photodiode mesure un rayonnement optique inférieur ou égal à un seuil prédéfini de rayonnement optique.

Grâce à ces dispositions, cette troisième source de lumière peut remplir une fonction de feu de position.

Selon encore d'autres caractéristiques particulières de ce dispositi,
- le premier seuil prédéfini de décélération est compris entre 0,2 et 2 m/s², de préférence sensiblement égal à 1,96 m/s²,et
- le deuxième seuil prédéfini de décélération est de l'ordre de 20 m/s².

Par ailleurs, de préférence, le troisième seuil prédéfini de basculement est de l'ordre de 3, et le laps de temps prédéfini est de l'ordre de 3 secondes.

Le demandeur a déterminé que ces dispositions étaient optimales. Pour rappel, les valeurs de décélération sont des valeurs absolues.

Selon encore d'autres caractéristiques particulières, l'unité de contrôle est configurée pour adapter le premier et/ou le deuxième et/ou le troisième seuils en fonction de la vitesse de déplacement du dispositif.

Ainsi, il est possible de changer la valeur des différents seuils en fonction de la vitesse, et donc de l'augmenter le cas échéant.

Pour mesurer la vitesse de déplacement du dispositif, l'unité de contrôle peut être configurée pour intégrer la valeur d'accélération mesurée par l'accéléromètre.

Selon encore d'autres caractéristiques particulières, ce dispositif comporte en outre
- une surface concave souple destinée à être en contact avec un casque sur lequel ledit dispositif est destiné à être fixé, et
- une surface convexe à travers laquelle est disposée la source de lumière.

Grâce à ces dispositions, le dispositif selon l'invention épouse la forme du casque et présente une forme aérodynamique.

Selon encore d'autres caractéristiques particulières de ce dispositif, la batterie d'accumulateurs électrochimiques est rechargeable, via un port USB.

Grâce à ces dispositions, l'utilisation du dispositif selon l'invention est facilitée.

L'invention a également pour objet un accessoire destiné à être porté par un utilisateur en mouvement, notamment un conducteur de véhicule terrestre, ledit casque et ledit accessoire comportant un tel dispositif de signalisation. Cet accessoire peut être un casque ou une veste.

Les avantages liés à ce casque et à cet accessoire, étant similaires à ceux du dispositif selon l'invention, ne sont pas rappelés ici.

### BRÈVE DESCRIPTION DES FIGURES

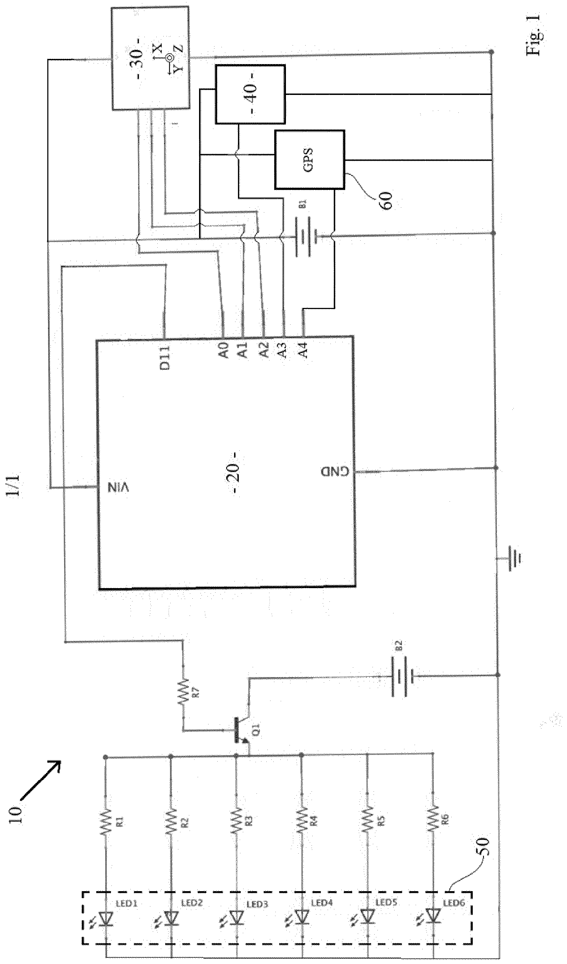

D'autres caractéristiques et avantages de l'invention apparaîtront à la lecture de la description qui suit d'un mode de réalisation préféré de l'invention, donné à titre d'exemple et en référence à la figure 1 annexée qui montre un schéma d'un exemple d'un circuit électronique d'un dispositif de signalisation selon l'invention.

Par ailleurs, dans la suite de la description, les valeurs numériques mentionnées, quoique non limitatives, se sont révélées aux essais comme fournissant les résultats les plus avantageux.

### EXPOSÉ DE MODES DE RÉALISATION

La figure 1 représente, de façon schématique, un exemple de réalisation d'un circuit électronique d'un dispositif de signalisation 10 selon l'invention.

Le dispositif 10 est destiné à être porté par un conducteur d'un véhicule terrestre, en particulier d'un véhicule à deux roues destiné à circuler sur la route, typiquement une moto ou un vélo.

Typiquement, le dispositif 10 peut être fixé ou intégré à l'arrière d'un casque, d'une veste, d'un sac-à-dos, ou tout autre accessoire destiné à être porté par un conducteur de véhicule. De préférence, ce circuit est relié à la masse, c'est-à-dire à l'accessoire sur lequel il est fixé ou intégré.

Le dispositif 10 comporte un accéléromètre 30, au moins une, ici deux, batterie(s) d'accumulateurs électrochimiques B1 et B2, une première source de lumière 50 constituée ici de six LEDs (LED1 - LED6) et/ou OLEDs, un moyen de communication sans fil 40 destiné à émettre un signal d'alerte, et une unité de contrôle 20. Dans une variante, la source de lumière est constituée d'une pluralité de LEDs et/ou OLEDs, par exemple huit, de préférence 12, mais peut aussi être constituée approximativement d'une centaine de LEDs et/ou d'OLEDs.

Typiquement, cette source de lumière 50 est de couleur normalisée, c'est-à-dire rouge.

Dans une autre variante, la source de lumière est constituée d'un écran lumineux.

De préférence, les batteires B1 et B2 présentent chacune une tension nominale de l'ordre de 3,7 volts.

Dans l'exemple, le moyen de communication sans fil 40 est connecté à une entrée A3 de l'unité de contrôle 20.

Dans l'exemple, la batterie B1 est connectée, via un transistor Q1 et six résistances R1, R2, R3, R4, R5 et R6, aux six LEDs (LED1 - LED6) de la source de lumière 50 pour les alimenter en électricité.

De préférence, les résistances R1, R2, R3, R4, R5 et R6 sont de l'ordre de 68 ohms.

Dans l'exemple, une sortie D11 de l'unité de contrôle 20 est connectée, via une résistance R7, le transistor Q1 et les six résistances R1, R2, R3, R4, R5 et R6, aux six LEDs (LED1 - LED6) de la source de lumière 50.

De préférence, la résistances R7 est de l'ordre de 150 ohms.

Dans l'exemple, la batterie B2 est connectée à une entrée VIN de l'unité de contrôle 20, au moyen de communication sans fil 40 et à l'accéléromètre 30 pour les alimenter en électricité.

L'unité de contrôle 20 est destinée à activer la source de lumière 50 lorsque l'accéléromètre 30 mesure une décélération supérieure ou égale à un premier seuil prédéfini de décélération, appelé seuil de freinage.

Aussi, l'unité de contrôle 20 est destinée à activer le moyen de communication 40 lorsque l'accéléromètre 30 mesure une décélération supérieure ou égale à un deuxième seuil prédéfini de décélération, appelé seuil d'accident.

Dans un exemple, le moyen de communication 40 émet le signal d'alerte via un réseau de télécommunication, par exemple GSM. Ainsi, les secours, et éventuellement au moins un proche du conducteur, sont avertis dès que le dispositif 10 subit un choc, c'est-à-dire dès que ledit conducteur est victime d'un accident.

Dans une variante, le moyen de communication 40 émet le signal d'alerte via une application dédiée d'un téléphone mobile du conducteur. Dans ce cas, le moyen de communication 40 fonctionne par exemple par Wi-Fi (Wireless Fidelity, en langue anglaise), Bluetooth, ou par communication en champ propre (CCP), etc.

Ainsi, directement, ou par l'intermédiaire d'une application dédiée implantée dans un dispositif mobile du conducteur, tel qu'un téléphone mobile, ce conducteur peut être relié à une plateforme distante dédiée. Cette plateforme distante permet notamment d'avertir les secours, lors de la réception d'un signal d'alerte émis par le moyen de communication 40 et diffusé via un réseau de télécommunication tel qu'explicqué ci-dessus. Elle peut également permettre aux utilisateurs de rester en contact les uns avec les autres pour former une communauté d'échange d'information et d'expérience. Typiquement, l'unité de contrôle 20 est de type processeur, microcontrôleur, PLD (programmable logic device, en langue anglaise), FPGA (field-programmable gate array, en langue anglaise), EPLD (erasable programmable logic device, en langue anglaise), CPLD (complex programmable logic device en langue anglaise), PAL (programmable array logic, en langue anglaise), ou PLA (programmable logic array, en langue anglaise).

De préférence, le dispositif 10 comporte en outre un système de géolocalisation 60, par exemple de type GPS (Global Positioning System, en langue anglais) destiné à mesurer les coordonnées géographiques dudit dispositif, le signal d'alerte contenant lesdites coordonnées géographiques.

Dans l'exemple, la batterie B2 est connectée au système de géolocalisation 60 qui est lui-même connecté à une entrée A4 de l'unité de contrôle 20.

Dans un exemple, le dispositif 10 comporte une deuxième source de lumière (non représentée sur la figure 1). L'unité de contrôle 20 est alors en outre destinée à activer cette deuxième source de lumière lorsque l'accéléromètre 30 mesure une décélération supérieure ou égale au deuxième seuil prédéfini de décélération. Dans ce cas, la deuxième source de lumière est préférentiellement de couleur orange et fonctionne en clignotement.

L'accéléromètre 30 est électronique et réalise ses mesures selon trois axes orthogonaux X, Y et Z. Dans ce cas, l'accéléromètre 30 comporte une sortie pour communiquer les mesures de chaque axe X, Y et Z, chacune des sorties étant connectée par une liaison filaire à une entrée distincte A0, A1 et A2, respectivement, de l'unité de contrôle 20.

L'unité de contrôle 20 est en outre destinée à activer le moyen de communication 40 et/ou la deuxième source de lumière lorsque l'accéléromètre 30 mesure, selon au moins un des axes X, Y et Z, un nombre de basculements entre accélération et décélération supérieur ou égal à un troisième seuil de nombre de basculements prédéfini, dans un laps de temps prédéfini.

Dans un exemple, ce seuil de nombre de basculements est de 3 et ce laps de temps prédéfini est de 3 secondes.

Dans un exemple, le dispositif 10 comporte en outre une photodiode et une troisième source de lumière (non représentées sur la figure 1). L'unité de contrôle 20 est alors en outre destinée à activer cette troisième source de lumière lorsque cette photodiode mesure un rayonnement optique inférieur ou égal à un seuil prédéfini de rayonnement optique, c'est-à-dire lorsque la luminosité extérieure devient faible.

Dans ce cas, cette troisième source de lumière serait de couleur rouge et remplirait une fonction de feu de position.

Dans un exemple, le dispositif 10 comporte en outre une quatrième source de lumière et un détecteur de brouillard et de bruine (non représentés sur la figure 1). L'unité de contrôle 20 est alors en outre destinée à activer cette quatrième source de lumière lorsque ce détecteur mesure une hygrométrie supérieure ou égale à un seuil prédéfini d'hygrométrie, c'est-à-dire lorsque l'humidité de l'air devient élevée.

Dans ce cas, cette quatrième source de lumière serait de couleur rouge et remplirait une fonction de feu de brouillard. A cet effet, cette quatrième source de lumière serait plus puissante que les autres qui, de préférence sont configurées pour être visibles par un observateur à 50 mètres de jour et 150 mètres de nuit.

De préférence, le premier seuil prédéfini de décélération est compris entre 0,2 et 2 m/s², de préférence sensiblement égal à 1,96 m/s², et le deuxième seuil prédéfini de décélération est de l'ordre de 20 m/s².

On peut prévoir que les premier, deuxième et troisième seuils prédéfinis, ou au moins l'un d'entre eux, soit adaptatifs en fonctiojn de la vitesse. Dans ce cas, l'unité de contrôle 20 est configurée pour adapter le ou les seuils en question en fonction de la vitesse de déplacement du dispositif.

Ce caractère adpatatif de l'un des seuils au moins, permet de changer la valeur de ce seuil en fonction de la vitesse. Ainsi, par exemple, si la vitesse augmente, on peut prévoir d'augmenter le premier seuil pour faire en sorte que la première source de lumière 50 ne soit activée qu'à partir d'une valeur de décelération plus importante que dans le cas d'une vitesse moindre.

Pour mesurer la vitesse de déplacement du dispositif, l'unité de contrôle 20 est configurée pour intégrer la valeur d'accélération mesurée par l'accéléromètre 30. Cette valeur de vitesse ainsi déterminée peut éventuellement être validée par l'intermédiaire d'un gyroscope intégré dans le dispositif.

Dans le cas où le dispositif 10 est fixé à un casque, ledit dispositif comporte en outre une surface concave souple (non représentée sur la figure 1) destinée à être en contact avec ledit casque, et une surface convexe (non représentée sur la figure 1) à travers laquelle sont disposées la ou les source(s) de lumière 50.

De préférence, le dispositif 10 est fixé de manière amovible à l'accessoire porté par le conducteur de véhicule terrestre.

Dans un exemple, l'élément souple est réalisé en caoutchouc ou en tout autre matériau élastique naturel et/ou synthétique.

De préférence, les batteries d'accumulateurs électrochimiques B1 et B2 est rechargeable, via un port USB et, dans un exemple, lesdites batteries sont de type lithium-ion polymère.

De préférence, le dispositif 10 comporte un indicateur de son état de charge (non représenté sur la figure 1) qui est
- soit binaire si ledit état de charge est défini comme étant suffisant ou insuffisant,
- soit gradué si ledit état de charge est défini comme étant un taux de charge absolu.

Bien entendu, la présente invention n'est pas limitée aux exemples et aux modes de réalisation décrits et représentés, mais elle est susceptible de nombreuses variantes accessibles à l'homme de l'art. En particulier, l'invention ne se limite pas à un dispositif destné à être porté par un conducteur de véhicule terrestre tel qu'une moto, mais s'étend à un dsipositif destiné à être porté par un utilisateur en mouvement. Par ailleurs, l'invention ne se limite pas à l'intégration du dispositif dans un accessoire de type casque de protection, par exemple pour la pratique de la moto, du ski ou pour la protection sur un chantier de construction, mais s'étend à l'intégration du dispositif dans tout accessoire susceptible d'être porté par un utilisateur en mouvement, tel qu'une veste ou un sac à dos.

## Revendications

1. Dispositif de signalisation (10) destiné à être porté par un utilisateur en mouvement, notamment un conducteur de véhicule terrestre, ledit dispositif comportant un accéléromètre (30) électronique qui réalise ses mesures selon trois axes orthogonaux, une batterie d'accumulateurs électrochimiques (B1 ; B2), une première source de lumière (50), un moyen de communication sans fil destiné à émettre un signal d'alerte, et une unité de contrôle (20) destinée à activer
- ladite source de lumière lorsque ledit accéléromètre mesure une décélération supérieure ou égale à un premier seuil prédéfini de décélération, appelé seuil de freinage, et
- ledit moyen de communication lorsque ledit accéléromètre mesure une décélération supérieure ou égale à un deuxième seuil prédéfini de décélération, appelé seuil d'accident,
**caractérisé en ce que** l'unité de contrôle (20) est en outre destinée à activer le moyen de communication lorsque ledit accéléromètre (30) mesure un nombre de basculements entre accélération et décélération supérieur ou égal à un troisième seuil de nombre de basculements prédéfini, dans un laps de temps prédéfini.

2. Dispositif (10) selon la revendication 1, **caractérisé en ce qu'**il comporte en outre un système de géolocalisation destiné à mesurer les coordonnées géographiques dudit dispositif, le signal d'alerte émis par le moyen de communication sans fil contenant lesdites coordonnées géographiques.

3. Dispositif (10) selon la revendication 1 ou 2, **caractérisé en ce qu'**il comporte en outre une deuxième source de lumière, l'unité de contrôle (20) étant en outre destinée à activer ladite deuxième source de lumière lorsque l'accéléromètre (30) mesure une décélération supérieure ou égale au deuxième seuil prédéfini de décélération.

4. Dispositif (10) selon la revendication 3, **caractérisé en ce que** l'unité de contrôle (20) est en outre destinée à activer la deuxième source de lumière lorsque ledit accéléromètre (30) mesure un nombre de basculements entre accélération et décélération supérieur ou égal au troisième seuil de nombre de basculements prédéfini, dans le laps de temps prédéfini.

5. Dispositif (10) selon l'une quelconque des revendications 1 à 4, **caractérisé en ce qu'**il comporte en outre une photodiode et une troisième source de lumière, l'unité de contrôle (20) étant en outre destinée à activer ladite troisième source de lumière lorsque ladite photodiode mesure un rayonnement optique inférieur ou égal à un seuil prédéfini de rayonnement optique.

6. Dispositif (10) selon l'une quelconque des revendications 1 à 5, **caractérisé en ce que**
- le premier seuil prédéfini de décélération est compris entre 0,2 et 2 m/s², de préférence sensiblement égal à 1,96 m/s², et
- le deuxième seuil prédéfini de décélération est de l'ordre de 20 m/s².

7. Dispositif (10) selon l'une quelconque des revendications 1 à 5, **caractérisé en ce que** le troisième seuil prédéfini est de l'ordre de 3, et le laps de temps prédéfini est de l'ordre de 3 secondes.

8. Dispositif (10) selon l'une quelconque des revendications 1 à 6, **caractérisé en ce que** l'unité de contrôle (20) est configurée pour adapter le premier et/ou le deuxième et/ou le troisième seuils en fonction de la vitesse de déplacement du dispositif (10).

9. Dispositif (10) selon la revendication 7, **caractérisé en ce que** l'unité de contrôle (20) est configurée pour mesurer la vitesse de déplacement du dispositif (10) par intégration de la valeur d'accélération mesurée par l'accéléromètre (30).

10. Dispositif (10) selon l'une quelconque des revendications 1 à 9, **caractérisé en ce qu'**il comporte en outre
- une surface concave souple destinée à être en contact avec un casque sur lequel ledit dispositif est destiné à être fixé, et
- une surface convexe à travers laquelle est disposée la source de lumière.

11. Dispositif (10) selon l'une quelconque des revendications 1 à 10, **caractérisé en ce que** la batterie d'accumulateurs électrochimiques (B1 ; B2) est rechargeable, via un port USB.

12. Accessoire destiné à être porté par un utilisateur en mouvement, notamment un conducteur de véhicule terrestre, ledit accessoire comportant un dispositif de signalisation (10) selon l'une quelconque des revendications 1 à 8.

13. Accessoire selon la revendication 12, ledit accessoire étant un casque, une veste ou un sac-à-dos.

## Patentansprüche

1. Signalisierungsvorrichtung (10), die dazu bestimmt ist, von einem sich bewegenden Benutzer getragen zu werden, insbesondere von einem Landfahrzeugfahrer, wobei die Vorrichtung einen elektronischen Beschleunigungsmesser (30) umfasst, der seine Messungen entlang von drei orthogonalen Achsen ausführt, eine Batterie elektrochemischer Akkumulatoren (B1; B2), eine erste Lichtquelle (50), ein drahtloses Kommunikationsmittel, das dazu bestimmt ist, ein Warnsignal abzugeben, und eine Steuereinheit (20) umfasst, die dazu bestimmt ist,
- die Lichtquelle zu aktivieren, wenn der Beschleunigungsmesser eine Verlangsamung größer oder gleich einem ersten vorbestimmten Verlangsamungsschwellenwert, Bremsschwelle genannt, misst, und
- das Kommunikationsmittel zu aktivieren, wenn der Beschleunigungsmesser eine Verlangsamung größer oder gleich einem zweiten vordefinierten Verlangsamungsschwellenwert, Unfallschwelle genannt, misst,
**dadurch gekennzeichnet, dass** die Steuereinheit (20) außerdem dazu bestimmt ist, das Kommunikationsmittel zu aktivieren, wenn der Beschleunigungsmesser (30) eine Anzahl von Wechseln zwischen Beschleunigung und Verlangsamung größer oder gleich einem vorbestimmten dritten Schwellenwert von Wechseln innerhalb einer vordefinierten Zeit misst.

2. Vorrichtung (10) nach Anspruch 1, **dadurch gekennzeichnet, dass** sie außerdem ein Geolokalisierungssystem umfasst, das dazu bestimmt ist, die geographischen Koordinaten der Vorrichtung zu messen, wobei das Warnsignal, das von dem drahtlosen Kommunikationsmittel abgegeben wird, die geographischen Koordinaten enthält.

3. Vorrichtung (10) nach Anspruch 1 oder 2, **dadurch gekennzeichnet, dass** sie außerdem eine zweite Lichtquelle umfasst, wobei die Steuereinheit (20) außerdem dazu bestimmt ist, die zweite Lichtquelle zu aktivieren, wenn der Beschleunigungsmesser (30) eine Verlangsamung größer oder gleich dem zweiten vordefinierten Verlangsamungsschwellenwert misst.

4. Vorrichtung (10) nach Anspruch 3, **dadurch gekennzeichnet, dass** die Steuereinheit (20) außerdem dazu bestimmt ist, die zweite Lichtquelle zu aktivieren, wenn der Beschleunigungsmesser (30) eine Anzahl von Wechseln zwischen Beschleunigung und Verlangsamung größer oder gleich dem dritten vordefinierten Schwellenwert der Anzahl von Wechseln in der vordefinierten Zeitspanne misst.

5. Vorrichtung (10) nach einem der Ansprüche 1 bis 4, **dadurch gekennzeichnet, dass** sie außerdem eine Fotodiode und eine dritte Lichtquelle umfasst, wobei die Steuereinheit (20) außerdem dazu bestimmt ist, die dritte Lichtquelle zu aktivieren, wenn die Fotodiode eine optische Strahlung kleiner oder gleich einem vordefinierten Schwellenwert optischer Strahlung misst.

6. Vorrichtung (10) nach einem der Ansprüche 1 bis 5, **dadurch gekennzeichnet, dass**
- der erste vordefinierte Verlangsamungsschwellenwert zwischen 0,2 und 2 m/s² liegt, bevorzugt im Wesentlichen gleich 1,96 m/s² ist, und
- der zweite vordefinierte Verlangsamungsschwellenwert in der Größenordnung von 20 m/s² liegt.

7. Vorrichtung (10) nach einem der Ansprüche 1 bis 5, **dadurch gekennzeichnet, dass** der dritte vordefinierte Schwellenwert in der Größenordnung von 3 liegt, und die vordefinierte Zeitspanne in der Größenordnung von 3 Sekunden liegt.

8. Vorrichtung (10) nach einem der Ansprüche 1 bis 6, **dadurch gekennzeichnet, dass** die Steuereinheit (20) konfiguriert ist, um den ersten und/oder den zweiten und/oder den dritten Schwellenwert in Abhängigkeit von der Bewegungsgeschwindigkeit der Vorrichtung (10) anzupassen.

9. Vorrichtung (10) nach Anspruch 7, **dadurch gekennzeichnet, dass** die Steuereinheit (20) konfiguriert ist, um die Bewegungsgeschwindigkeit der Vorrichtung (10) durch Integration des Beschleunigungswert, der von dem Beschleunigungsmesser (30) gemessen wird, zu messen.

10. Vorrichtung (10) nach einem der Ansprüche 1 bis 9, **dadurch gekennzeichnet, dass** sie außerdem
- eine biegsame konkave Oberfläche umfasst, die dazu bestimmt ist, mit einem Helm, auf dem die Vorrichtung zu befestigen ist, in Berührung zu sein, und
- eine konvexe Oberfläche umfasst, durch welche die Lichtquelle angeordnet ist.

11. Vorrichtung (10) nach einem der Ansprüche 1 bis 10, **dadurch gekennzeichnet, dass** die Batterie elektrochemischer Akkumulatoren (B1; B2) über einen USB-Port aufladbar ist.

12. Zubehör, das dazu bestimmt ist, von einem sich bewegenden Benutzer, insbesondere von einem Landfahrzeugfahrer, getragen zu werden, wobei das Zubehör eine Signalisierungsvorrichtung (10) nach einem der Ansprüche 1 bis 8 umfasst

13. Zubehör nach Anspruch 12, wobei das Zubehör ein Schutzhelm, eine Jacke oder ein Rucksack ist.

## Claims

1. A signaling device (10) intended to be worn by a user in movement, in particular a driver of a land vehicle, said device comprising an electronic accelerometer (30) taking measurements along three orthogonal axes, an array of electrochemical rechargeable batteries (B1; B2), a first light source (50), wireless communication means arranged to transmit an alert signal and a control unit (20) arranged to activate:
- said light source when said accelerometer measures deceleration equal to or higher than a first predefined deceleration threshold, called braking threshold, and
- said communication means when said accelerometer measures deceleration equal to or higher than a second predefined deceleration threshold, called accident threshold,
**characterized in that** the control unit (20) is further arranged to activate the communication means when said accelerometer (30) measures a number of switchovers between acceleration and deceleration equal to or higher than a third predefined threshold of number of switchovers within a predefined lapse of time.

2. The device (10) according to claim 1, **characterized in that** it further comprises a geolocating system arranged to measure the geographical coordinates of said device, the alert signal transmitted by the wireless communication means containing said geographical coordinates.

3. The device (10) according to claim 1 or 2, **characterized in that** it further comprises a second light source, the control unit (20) being further arranged to activate said second light source when the accelerometer (30) measures deceleration equal to or higher than the second predefined deceleration threshold.

4. The device (10) according to claim 3, **characterized in that** the control unit (20) is further arranged to activate the second light source when said accelerometer (30) measures a number of switchovers between acceleration and deceleration equal to or higher than the third predefined threshold of number of switchovers within the predefined lapse of time.

5. The device (10) according to any of claims 1 to 4, **characterized in that** it further comprises a photodiode and a third light source, the control unit (20) being further arranged to activate said third light source when said photodiode measures optical radiation equal to or lower than a predefined optical radiation threshold.

6. The device (10) according to any of claims 1 to 5, **characterized in that**:
- the first predefined deceleration threshold is between 0.2 and 2 m/s², preferably substantially equal to 1.96 m/s², and
- the second predefined deceleration threshold is approximately 20 m/s².

7. The device (10) according to any of claims 1 to 5, **characterized in that** the third predefined threshold is approximately equal to 3 and the predefined lapse of time is approximately 3 seconds.

8. The device (10) according to any of claims 1 to 6, **characterized in that** the control unit (20) is configured to adapt the first and/or second and/or third thresholds as a function of the speed of movement of the device (10).

9. The device (10) according to claim 7, **characterized in that** the control unit (20) is configured to measure the speed of movement of the device (10) by integrating the acceleration value measured by the accelerometer (30).

10. The device (10) according to any of claims 1 to 9, **characterized in that** it further comprises:
- a flexible concave surface intended to come into contact with a helmet on which said device is intended to be attached, and
- a convex surface through which the light source is arranged.

11. The device (10) according to any of claims 1 to 10, **characterized in that** the array of electrochemical rechargeable batteries (B1; B2) is rechargeable via a USB port.

12. An accessory intended to be worn by a user in movement, in particular a driver of a land vehicle, said accessory comprising a signaling device (10) according to any of claims 1 to 8.

13. The accessory according to claim 12, said accessory being a helmet, jacket or backpack.
